# EUROPÄISCHE PATENTSCHRIFT

(11) **EP 2 732 072 B1**
(45) Veröffentlichungstag und Bekanntmachung des Hinweises auf die Patenterteilung: **28.11.2018**
(21) Anmeldenummer: 12758792.1
(22) Anmeldetag: 23.08.2012
(51) Int. Cl.: C23C 24/04, B22F 9/04, B23P 6/04

(54) **VERFAHREN ZUM REPARIEREN EINER SCHADSTELLE IN EINEM GUSSTEIL UND VERFAHREN ZUM ERZEUGEN EINES GEEIGNETEN REPARATURMATERIALS**
METHOD FOR REPAIRING DAMAGED AREAS IN A CAST PART AND METHOD FOR MANUFACTURING AN APPROPRIATE REPAIR MATERIAL
PROCÉDÉ DE RÉPARATION DES PARTIES ENDOMMAGÉES D'UNE PIÈCE MOULÉE ET PROCÉDÉ DE FABRICATION D'UN MATÉRIAU DE RÉPARATION APPROPRIÉ

(30) Priorität: 01.09.2011 DE 102011081998
(43) Veröffentlichungstag der Anmeldung: 21.05.2014
(73) Patentinhaber: Siemens Aktiengesellschaft, 80333 München (DE)
(72) Erfinder: HEINRICHSDORFF, Frank, 14513 Teltow (DE); KRÜGER, Ursus, 14089 Berlin (DE); REICHE, Ralph, 13465 Berlin (DE); STIER, Oliver, 12163 Berlin (DE)
(86) Internationale Anmeldenummer: PCT/EP2012/066395
(87) Internationale Veröffentlichungsnummer: WO 2013/030075

(56) Entgegenhaltungen:
- EP-A1- 1 829 988
- WO-A1-2007/042395
- DE-T2- 69 828 732
- US-A1- 2006 045 785
- US-A1- 2007 000 129
- US-A1- 2008 085 368

## Beschreibung

Die Erfindung betrifft ein Verfahren zum Reparieren einer Schadstelle in der Oberfläche eines Gussteils, bei dem ein Reparaturwerkstoff durch Kaltgasspritzen auf die Schadstelle aufgebracht wird. Außerdem betrifft die Erfindung ein Verfahren zum Erzeugen eines Reparaturmaterials für ein Bauteil.

Das Kaltgasspritzen ist ein an sich bekanntes Verfahren, bei dem für die Beschichtung vorgesehene Partikel mittels einer konvergent-divergenten Düse vorzugsweise auf Überschallgeschwindigkeit beschleunigt werden, damit diese aufgrund ihrer eingeprägten kinetischen Energie auf der zu beschichtenden Oberfläche haften bleiben. Hierbei wird die kinetische Energie der Teilchen genutzt, welche zu einer plastischen Verformung derselben führt, wobei die Beschichtungspartikel beim Auftreffen lediglich an ihrer Oberfläche aufgeschmolzen werden. Deshalb wird dieses Verfahren im Vergleich zu anderen thermischen Spritzverfahren als Kaltgasspritzen bezeichnet, weil es bei vergleichsweise tiefen Temperaturen durchgeführt wird, bei denen die Beschichtungspartikel im Wesentlichen fest bleiben. Vorzugsweise wird zum Kaltgasspritzen, welches auch als kinetisches Spritzen bezeichnet wird, eine Kaltgasspritzanlage verwendet, die eine Gasheizeinrichtung zum Erhitzen eines Gases aufweist. An die Gasheizeinrichtung wird eine Stagnationskammer angeschlossen, die ausgangsseitig mit der konvergent-divergenten Düse, vorzugsweise einer Lavaldüse verbunden wird. Konvergent-divergente Düsen weisen einen zusammenlaufenden Teilabschnitt sowie einen sich aufweitenden Teilabschnitt auf, die durch einen Düsenhals verbunden sind. Die konvergent-divergente Düse erzeugt ausgangsseitig einen Pulverstrahl in Form eines Gasstroms mit darin befindlichen Partikeln mit hoher Geschwindigkeit, vorzugsweise Überschallgeschwindigkeit.

Gemäß der EP 1 816 235 B1 ist es bekannt, dass Fehlstellen in Gussteilen mittels Kaltgasspritzen ausgebessert werden können. Zu diesem Zweck werden Werkstoffe verwendet, die gemäß der EP 1 816 235 B1 als artgleich bezeichnet werden. Hierunter sind Werkstoffe zu verstehen, die eine ähnliche oder die gleiche Zusammensetzung haben wie das zu reparierende Bauteil. Hierdurch kann erreicht werden, dass die ausgebesserte Stelle mit einem Material ausgefüllt wird, welches metallurgische Probleme nahezu völlig ausschließt. Damit ist gemeint, dass Diffusionsvorgänge, die bei Reparatur eines Gussteils mit einem artfremden Material nach erfolgter Reparatur insbesondere bei thermisch hoch beanspruchten Bauteilen einsetzen und zu einer Herabsetzung der Integrität des Gefüges führen, ausgeschlossen werden können. Diese können nämlich im schlimmsten Fall zu einem Bauteilversagen führen.
Gemäß der EP 1 829 988 A1 und gemäß der WO 2007/042395 A1 sind weitere Verfahren bekannt, bei denen Bauteile durch Auftragen von Partikeln mittels Kaltgasspritzen repariert werden. Hierbei sollen Partikel aus artgleichem Material verwendet werden. Dies bedeutet, dass der Werkstoff im Wesentlichen die gleiche Zusammensetzung haben soll, wie der Grundwerkstoff. Auch bei abweichender Zusammensetzung des Materials der Partikel kann eine Artgleichheit dadurch gewährleistet werden, dass vergleichbare chemische, physikalische und mechanische Eigenschaften vorhanden sind. Vorrangig kann bei der Reparatur von Bauteilen aus Nickel-Guss-Superlegierungen ein Partikelmaterial ausgewählt werden, was im Vergleich hierzu duktiler ist. Beispielsweise kann eine Nickel-Superlegierung als Material für die Partikel ausgewählt werden, die normalerweise als Knetlegierung Verwendung findet.

Gemäß der US 2006/0045785 A1 wird beschrieben, dass die Reparatur von Bauteiloberflächen durch Kaltgasspritzen erfolgen kann. Hierbei wird vorgeschlagen, dass Bauteile auch mittels Gusslegierungen repariert werden können. Die Partikel aus der Gusslegierung werden auf das zu reparierende Bauteil aufgetragen und füllen die Schadstelle dabei aus.

Das artgleiche Material zur Reparatur der Fehlstellen in dem Gussteil bildet allerdings ein Gefüge aus, welches hinsichtlich seiner Gefügestruktur unterschiedlich von dem Gussgefüge des umgebenden Bauteils ist.

Die Aufgabe der Erfindung liegt darin, ein Reparaturverfahren für Gussteile anzugeben, mit dem sich eine Reparaturstelle erzeugen lässt, die möglichst weitgehend an die Eigenschaften des die Reparaturstelle umgebenden Gussteils angepasst ist, wobei ein Verfahren zum Erzeugen eines Reparaturmaterials anzugeben ist, welches bei Anwendung in einem Reparaturverfahren die Aufgabe erfüllen kann.

Die Aufgabe wird durch das eingangs angegebene Verfahren zum Reparieren erfindungsgemäß dadurch gelöst, dass als Reparaturwerkstoff Spritzpartikel zum Einsatz kommen, die dasselbe Gefüge aufweisen, wie das Gussteil. Hierbei wird erfindungsgemäß durch Anwendung des Kaltgasspritzens davon profitiert, dass die durch Kaltgasspritzen bearbeiteten Partikel nicht aufgeschmolzen werden und daher auch nach Ausbildung der Schicht (in diesem Fall der Reparaturstelle) das Gefüge zumindest im Wesentlichen behalten, welches die verarbeiteten Spritzpartikel aufweisen. Daher ist es möglich, Spritzpartikel zu verwenden, die dasselbe Gussgefüge wie das zu reparierende Bauteil aufweisen und auf diese Weise eine Reparaturstelle mit genau dem Gussgefüge herzustellen, welches auch das die Reparaturstelle umgebende Gussteil aufweist. Hierdurch lässt sich vorteilhaft eine Reparatur von Gussteilen erreichen, bei der das reparierte Gussteil nahezu dieselben Eigenschaften aufweist, wie das Originalteil, da auch die Reparaturstelle genau dieselben Eigenschaften aufweist, wie das restliche Gussteil. Damit bleiben die Eigenschaften des zu reparierenden Gussteils vorteilhaft identisch mit dem Originalteil. Auch ist ein auf die erfindungsgemäße Weise repariertes Bauteil vor Korrosionsangriffen geschützt, die aufgrund von Ausbildung von elektrischen Lokalelementen entste hen könnten, wenn das Reparaturmaterial zwar dieselbe Zusammensetzung jedoch aufgrund einer anderen Legierungsausbildung edler oder unedler als der umgebende Werkstoff des Gussteils ist.

Um einen Reparaturwerkstoff herzustellen, der in der angegebenen Weise verarbeitet werden kann, wird erfindungsgemäß die Aufgabe durch das Erzeugen eines Reparaturmaterials gelöst, bei dem das zu reparierende Bauteil ein Gussteil ist und das Reparaturmaterial durch Zerkleinern eines Körpers aus demjenigen Material gewonnen wird, aus dem das Gussteil besteht. Außerdem weist dieser Körper dasselbe Gussgefüge auf, wie das Gussteil. Beispielsweise kann der Körper aus ausgedienten Gussteilen derselben Herstellungscharge wie das zu reparierende Gussteil bestehen. Hierdurch wird sichergestellt, dass das Material des Körpers demjenigen des Gussteils auch hinsichtlich der Gefügebeschaffenheit genau entspricht. Eine andere Möglichkeit besteht darin, dass der Körper vor dem Zerkleinern extra zu diesem Zwecke hergestellt wird. Hierbei können vorteilhaft Körperformen gewählt werden, die eine unproblematische Erzeugung des Körpers mit einem möglichst ungestörten Gussgefüge ermöglichen. Beispielsweise sind Körper mit besonders einfacher geometrischer Struktur, wie beispielsweise Barren, besonders als Körper zum anschließenden Zerkleinern geeignet. Auch ist es möglich, die Randzone des erzeugten Körpers durch ein spanendes Verfahren abzutragen und somit einen Körper zu erhalten, der nur aus den inneren Zonen des hergestellten Gussteils besteht. In diesem Bereich wird vorteilhaft das Gefüge des Körpers am wenigsten durch die ablaufenden Vorgänge während der Erstarrung des Gussteils gestört. Das Zerkleinern des Körpers kann beispielsweise durch Schreddern und/oder Mahlen erfolgen. Hierdurch können Spritzpartikel für ein Kaltgasspritzen hergestellt werden, wobei unterschiedliche Partikelgrößen realisierbar sind.

Gemäß einer Ausgestaltung der Erfindung ist vorgesehen, dass die Spritzpartikel einen mittleren Durchmesser von mindestens 100 µm und höchstens 200 µm. Diese Partikelgrößen lassen sich vorteilhaft durch Kaltgasspritzen besonders einfach verarbeiten. Vorteilhaft ist es überdies, wenn sich die Streuung der unterschiedlichen mittleren Durchmesser der Spritzpartikel mindestens über die Hälfte des oben angegebenen Bereiches erstreckt. So bekommt man ein Spritzmaterial, welches aus Spritzpartikeln mit unterschiedlichen mittleren Durchmessern besteht, so dass diese Partikel sich vorteilhaft zu einer vergleichsweise dichten Schicht zusammenlagern können, wobei Spritzpartikel mit einem kleineren mittleren Durchmesser die Zwischenräume zwischen den Partikeln mit einem größeren mittleren Durchmesser ausfüllen können.

Gemäß einer anderen Ausgestaltung der Erfindung ist vorgesehen, dass die Schadstelle des Gussteils während des Aufbringens der Spritzpartikel beheizt wird. Dies kann insbesondere durch lokale Bestrahlung durch einen Laserstrahl erfolgen. Durch eine Vorwärmung des Gussteils kann erreicht werden, dass dieses im Bereich der zu reparierenden Schadstelle sich ausdehnt und bei einer anschließenden Abkühlung sowohl der Reparaturstelle aus den Spritzpartikeln als auch des umgebenden Materials des Gussteils eine vergleichsweise spannungsarme Verbindung erzielt wird. Außerdem kann gemäß einer weiteren Ausgestaltung der Erfindung auch eine Wärmenachbehandlung des Gussteils nach Aufbringen des Reparaturwerkstoffes erfolgen.

Bei Wärmebehandlungen bzw. dem Aufheizen der Reparaturstelle muss beachtet werden, dass die erreichten Temperaturen das Gussgefüge nicht verändern. Hierdurch wird verhindert, dass das Gussteil wegen der Reparatur seine Eigenschaften ändert, da genau dieser Umstand durch das erfindungsgemäße Reparaturverfahren verhindert werden soll.

Besonders vorteilhaft ist es, wenn das Gussteil aus globularem Grauguss besteht. Die Gefügestruktur von globularem Grauguss lässt sich vorteilhaft mit dem erfindungsgemäßen Verfahren zum Erzeugen eines Reparaturmaterials leicht erzeugen. Bei der Herstellung der Spritzpartikel ist zu beachten, dass die globularen_Kohlenstoffeinlagerungen in dem Gefüge der Spritzpartikel gemäß der Norm DIN EN ISO 945 fast ausschließlich einen Durchmesser von 10 bis 150 µm aufweisen. Daher sollten die Spritzpartikel mindestens einen mittleren Durchmesser von 100 µm aufweisen, damit durch die Spritzpartikel das Gefüge von Grauguss durch das Kaltgasspritzen noch nachgebildet werden kann. Es zeigt sich, dass auch größere Kohlenstoffeinlagerungen dann noch zuverlässig zumindest teilweise durch das Grauguss-Matrixgefüge umschlossen sind und gut als Spritzpulver verarbeitet werden können. Als Legierung für den Grauguss kann beispielsweise GJS 400-15 dienen.

Repariert werden können auch Bauteile, die aus Gusseisen mit laminarem Kohlenstoff bestehen. Dies gilt beispielsweise für die EN GJL-Werkstoffgruppe. Auch hier gilt, dass die Spritzpartikel wegen der auftretenden Längen der Kohlenstsofflamellen von 10 bis 250 µm (gemäß DIN EN ISO 945 gilt dieser Größenbereich für den allergrößten Teil der Kohlenstoffeilagerungen) einen mittleren Durchmesser von 100 bis 200 µm aufweisen sollten, damit durch das Kaltgasspritzen das Gefüge des Gusswerkstoffes nachgebildet werden kann. Auch hier gilt, dass die Kohlenstoffeinlagerungen dann noch zuverlässig zumindest teilweise durch das Grauguss-Matrixgefüge umschlossen sind.

Weiterhin können die Gussteile beispielsweise auch aus Aluminium-Silizium-Legierungen bestehen, beispielsweise aus AlSi 17.

Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben. Es zeigen:
- Figur 1: ein Ausführungsbeispiel des erfindungsgemäßen Verfahrens zum Reparieren eines Gussteils als schematische Seitenansicht,
- Figur 2: ein Ausführungsbeispiel des Verfahrens zum Erzeugen eines Reparaturmaterials durch exemplarische Darstellung ausgewählter Verfahrensschritte und
- Figur 3: ein Ausführungsbeispiel eines mit dem erfindungsgemäßen Verfahren zum Reparieren reparierten Bauteils als Schnitt.

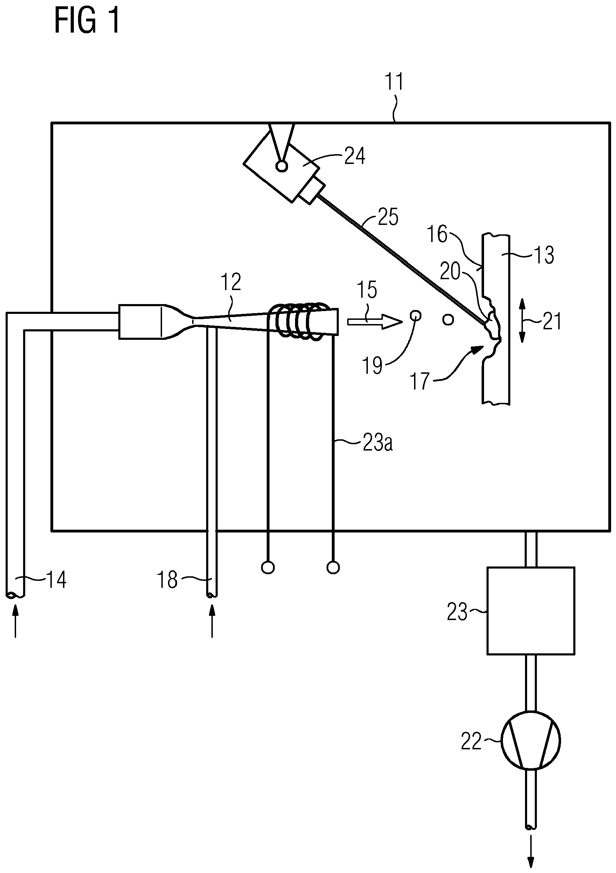

Dargestellt in Figur 1 ist eine Vorrichtung zum Kaltgasspritzen. Diese weist einen Vakuumbehälter 11 auf, in dem einerseits eine Kaltgas-Spritzdüse 12 und andererseits ein Gussteil 13 angeordnet sind (Befestigung nicht näher dargestellt). Durch eine erste Leitung 14 kann ein Prozessgas der Kaltgas-Spritzdüse 12 zugeführt werden. Diese ist, wie durch die Kontur angedeutet, als konvergent-divergente Düse (beispielsweise als Laval-Düse) ausgeführt, durch die das Prozessgas entspannt und in Form eines Gasstrahls (Pfeil 15) zu einer Oberfläche 16 des Gussteils 13 hin beschleunigt wird.

Weiterhin kann das Prozessgas in nicht dargestellter Weise erwärmt werden, wodurch sich in dem Vakuumbehälter 12 eine geforderte Prozesstemperatur einstellt.

Durch eine zweite Leitung 18 können der Kaltgas-Spritzdüse 12 Spritzpartikel 19 zugeführt werden, die in dem Gasstrahl 15 beschleunigt werden und auf die Oberfläche 16 im Bereich einer zu reparierenden Schadstelle 17 auftreffen. Die kinetische Energie der Spritzpartikel führt zu einem Anhaften derselben auf der Oberfläche 16. Zur Ausbildung eines Rparaturgefüges 20 in der Schadstelle 17 kann das Gussteil 13 in Richtung des Doppelpfeils 21 vor der Kaltgas-Spritzpistole 12 hin und her bewegt werden. Während dieses Beschichtungsprozesses wird das Vakuum im Vakuumbehälter 11 durch eine Vakuumpumpe 22 ständig aufrechterhalten, wobei das Prozessgas vor Durchleitung durch die Vakuumpumpe 22 durch einen Filter 23 geführt wird, um Partikel auszufiltern, die beim Auftreffen auf die Oberfläche 16 nicht an diese gebunden wurden.

Mittels einer Heizung 23a können die Partikel 19 innerhalb der Kaltgas-Spritzdüse zusätzlich erwärmt werden. Hierdurch erfolgt ein zusätzlicher Energieeintrag, der direkt als thermische Energie oder durch eine Entspannung in der Kaltgas-Spritzdüse 12 in Form von kinetischer Energie den Spritzpartikeln 19 zugeführt wird. Als weitere Energiequelle ist ein Laser 24 in der Vakuumkammer 11 installiert, der auf die Auftreffstelle des Kaltstrahls 15 auf die Oberfläche 16 des Gussteils 13 gerichtet ist. An der Auftreffstelle sorgt die elektromagnetische Energie des Laserstrahls 25 in Verbindung mit der kinetischen und eventuell thermischen Energie der Spritzpartikel 19 für ein bleibendes Anhaften der Spritzpartikel 19 auf der Oberfläche 16, wodurch das Reparaturgefüge 20 ausgebildet wird.

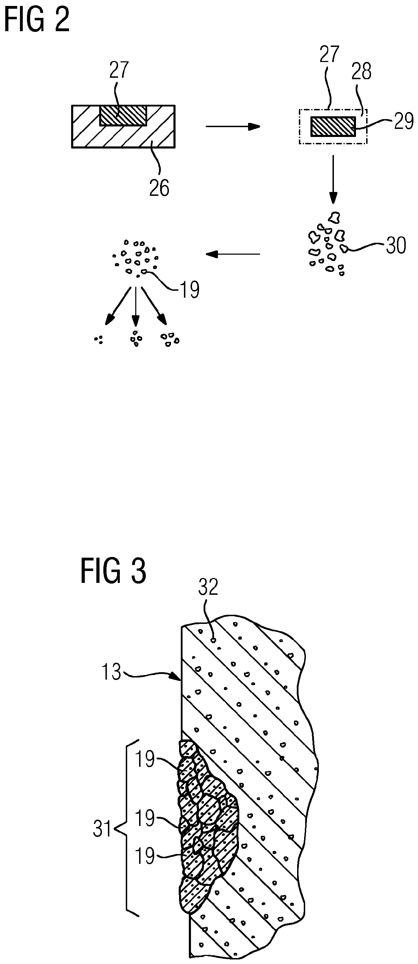

In Figur 2 ist ein Verfahren zur Herstellung des Reparaturmaterials dargestellt. Zunächst wird in einer Gussform 26 ein Barren 27 hergestellt, der als Rohteil (Körper) für die Herstellung der Spritzpartikel 19 dienen soll. Dieser Barren 27 wird nach Erstarrung des Gussteils entformt und es wird eine Oberflächenschicht 28 spanend von dem Barren 27 entfernt, so dass ein Kern 29 übrig bleibt. So werden oberflächennahe Bereiche des Barrens 27 verworfen, die Inhomogenitäten im Gussgefüge oder chemische Veränderungen aufgrund des Einflusses der Umgebungsluft aufweisen können. Der Kern 29 wird anschließend in einer nicht näher dargestellten Einrichtung geschreddert, wodurch grobe Partikel 30 entstehen. Diese Partikel 30 werden anschließend beispielsweise in einer Kugelmühle gemahlen, wodurch eine weitere Zerkleinerung erfolgt und die Herstellung der Spritzpartikel beendet wird. In einem nachfolgenden Schritt können diese Spritzpartikel noch nach Größen klassiert werden, um anschließend Spritzpulver in unterschiedlichen Größenklassen der Spritzpartikel herzustellen. Zur Herstellung von Spritzpulvern, bei denen die Spritzpartikel unterschiedliche mittlere Durchmesser über einen bestimmen Bereich aufweisen, können die verschiedenen Größenklassen der Spritzpartikel in geeigneter Weise gemischt werden.

In diesem Zusammenhang wird darauf hingewiesen, dass als mittlerer Durchmesser eines Spritzpartikels ein Durchmesser verstanden werden soll, der dem Durchmesser eines kugelförmigen Partikels entspricht, wobei dieser kugelförmige Partikel dasselbe Volumen aufweisen soll, wie das reale Partikel, welches gewöhnlich von der Kugelform abweicht. Als mittlerer Durchmesser wird demnach nicht der durchschnittliche Durchmesser einer größeren Anzahl von Partikeln verstanden. Wenn im Zusammenhang mit dieser Erfindung von unterschiedlichen mittleren Durchmessern der Spritzpartikel die Rede ist, so ist damit also gemeint, dass Spritzpartikel unterschiedlicher Größenklassen gemischt vorliegen.

Der Figur 3, die den Schnitt durch ein repariertes Gussteil 13 darstellt, zeigt, dass die Verwendung von Spritzpartikeln 19 unterschiedlicher Größenklassen (also mit unterschiedlichen mittleren Durchmessern) vorteilhaft dazu führt, dass in der Reparaturstelle 31 des Gussteils 13 ein dichtes Gefüge entsteht. Dargestellt in Figur 3 ist ein Gussteil aus globularem Grauguss, wobei in der Matrix aus einem Eisenwerkstoff globularer Kohlenstoff 32 verteilt ist. Dies gilt auch für die Spritzpartikel 19, deren jeweilige Größe in Figur 3 noch zu erkennen ist, da diese einzeln dargestellt sind. Dabei füllen kleinere Spritzpatikel 19 die Zwischenräume zwischen größeren Spritzpartikeln 19 aus. In der Realität verschmelzen die Oberflächen der Spritzpartikel 19 durch die Entwicklung thermischer Energie beim Aufprall der Spritzpartikel, so dass die in Figur 3 dargestellten Grenzen zwischen den Partikeln teilweise aufgehoben werden.

## Patentansprüche

1. Verfahren zum Reparieren einer Schadstelle (17) in der Oberfläche eines Gussteils (13), bei dem ein Reparaturwerkstoff durch Kaltgasspritzen auf die Schadstelle (17) aufgebracht wird, wobei als Reparaturmaterial Spritzpartikel (19) zum Einsatz kommen, die dasselbe Gussgefüge aufweisen, wie das Gussteil (13),
**dadurch gekennzeichnet,**
**dass** das Reparaturmaterial für das Kaltgasspritzen geeignet ist und durch Zerkleinern eines Körpers aus demjenigen Material gewonnen wird, aus dem das Gussteil besteht, wobei der Körper dasselbe Gussgefüge aufweist, wie das Gussteil, indem
• der Körper aus ausgedienten Gussteilen derselben Herstellungscharge wie das zu reparierende Gussteil (13) besteht oder
• der Körper zum Zwecke des Zerkleinerns mit dem Gussgefüge hergestellt wird.

2. Verfahren nach Anspruch 1,
**dadurch gekennzeichnet,**
**dass** die Spritzpartikel (19) einen mittleren Durchmesser von mindestens 100 µm und höchstens 200 µm aufweisen.

3. Verfahren nach Anspruch 2,
**dadurch gekennzeichnet,**
**dass** sich die Streuung der unterschiedlichen mittleren Durchmesser der Spritzpartikel mindestens über die Hälfte des gemäß Anspruch 2 angegebenen Bereiches erstreckt.

4. Verfahren nach einem der vorangehenden Ansprüche,
**dadurch gekennzeichnet,**
**dass** die Schadstelle während des Aufbringens der Spritzpartikel (19) beheizt, insbesondere durch einen Laserstrahl bestrahlt wird.

5. Verfahren nach einem der vorangehenden Ansprüche,
**dadurch gekennzeichnet,**
**dass** das Gussteil (13) nach Aufbringen des Reparaturwerkstoffes einer Wärmenachbehandlung unterworfen wird.

6. Verfahren nach einem der vorangehenden Ansprüche,
**dadurch gekennzeichnet,**
**dass** das Gussteil (19) aus globularem Grauguss besteht.

7. Verfahren nach einem der vorangehenden Ansprüche,
**dadurch gekennzeichnet,**
**dass** das Zerkleinern durch Shreddern und/oder Mahlen erfolgt.

## Claims

1. Method for repairing a damaged site (17) in the surface of a cast part (13), in which method a repair material is applied to the damaged site (17) by cold gas spraying, wherein spray particles (19) having the same cast microstructure as the cast part (13) are used as the repair material,
**characterized**
**in that** the repair material is suitable for cold gas spraying and is obtained by comminuting a body made of that material of which the cast part consists, wherein the body has the same cast microstructure as the cast part,
**in that**
• the body consists of spent cast parts from the same production batch as the cast part (13) to be repaired, or
• the body is produced for the purpose of comminution with the cast microstructure.

2. Method according to Claim 1,
**characterized**
**in that** the spray particles (19) have a mean diameter of at least 100 µm and at most 200 µm.

3. Method according to Claim 2,
**characterized**
**in that** the distribution of the different mean diameters of the spray particles extends at least over half the range indicated in claim 2.

4. Method according to one of the preceding claims,
**characterized**
**in that** the damaged site is heated, in particular irradiated by a laser beam, during the application of the spray particles (19).

5. Method according to one of the preceding claims,
**characterized**
**in that** the cast part (13) is subjected to subsequent heat treatment after application of the repair material.

6. Method according to one of the preceding claims,
**characterized**
**in that** the cast part (19) consists of globular gray cast iron.

7. Method according to one of the preceding claims,
**characterized**
**in that** the comminution is effected by shredding and/or grinding.

## Revendications

1. Procédé de réparation d'un point (17) endommagé à la surface d'une pièce (13) coulée, dans lequel on dépose un matériau de réparation, par projection au gaz froid, sur le point (17) endommagé en utilisant, comme matériau de réparation, des particules (19) de projection, qui ont la même texture de coulée que la pièce (13) coulée,
**caractérisé en ce que**
le matériau de réparation est propre à la projection au gaz froid et on l'obtient par fragmentation d'un corps en le matériau, dont est constituée la pièce coulée, le corps ayant la même texture de coulée que la pièce coulée, par le fait que
• le corps est constitué de pièces coulées usées de la même charge de fabrication que la pièce (13) coulée à réparer ou
• le corps est fabriqué aux fins de la fragmentation en ayant la texture de coulée.

2. Procédé suivant la revendication 1,
**caractérisé en ce que** les particules (19) de projection ont un diamètre moyen d'au moins 100 µm et d'au plus 200 µm.

3. Procédé suivant la revendication 2,
**caractérisé en ce que**
la dispersion des diamètres moyens différents des particules de projection s'étend au moins sur la moitié de la plage indiquée à la revendication 2.

4. Procédé suivant l'une des revendications précédentes,
**caractérisé en ce que**
l'on chauffe le point endommagé pendant le dépôt des particules (19) de projection, notamment par un faisceau laser.

5. Procédé suivant l'une des revendications précédentes,
**caractérisé en ce que**
l'on soumet la pièce (13) coulée à un post-traitement thermique après le dépôt du matériau de réparation.

6. Procédé suivant l'une des revendications précédentes,
**caractérisé en ce que**
la pièce (19) coulée est en fonte grise sphéroïdale.

7. Procédé suivant l'une des revendications précédentes,
**caractérisé en ce que**
la fragmentation s'effectue par déchiquetage et/ou par broyage.
